# EUROPEAN PATENT SPECIFICATION

(11) **EP 0 451 186 B1**
(45) Date of publication and mention of the grant of the patent: **15.02.1995**
(21) Application number: 90901055.5
(22) Date of filing: 30.10.1989
(51) Int. Cl.: B28B 1/52, E04B 1/78, E04C 2/16

(54) **METHOD AND APPARATUS FOR THE MANUFACTURE OF MINERAL WOOL PLATES**
VERFAHREN UND VORRICHTUNG ZUM HERSTELLEN VON PLATTEN AUS MINERALWOLLE
PROCEDE ET APPAREIL DE FABRICATION DE PLAQUES DE LAINE MINERALE

(43) Date of publication of application: 16.10.1991
(73) Proprietor: ROCKWOOL AKTIEBOLAGET, S-541 86 Skövde (SE)
(72) Inventor: CHRISTERSSON, Ulf, S-541 35 Skövde (SE); WOLFF, Hakan, S-462 60 Vänersborg (SE); HARTUNG, Gunnar, S-541 40 Skövde (SE); LINDQVIST, Arne, S-541 51 Skövde (SE); PERSSON, Thomas, S-541 42 Skövde (SE)
(74) Representative: Avellan-Hultman, Olle
(86) International application number: SE8900609
(87) International publication number: WO9106407

(56) References cited:
- DE-C- 823 870
- DK-B- 155 163
- SE-B- 211 988
- SE-B- 452 040

## Description

Generally mineral wool plates are manufactured in that mineral wool, which is impregnated with a binder and which following to the fibrillation is dispersed in an air flow or a gas flow, is collected on a gas pervious conveyor. The air of gas which carries the mineral wool passes through the conveyor whereas the mineral wool is kept on the coneyor in the form of an endless mineral wool path having a substantially even thickness. Said mineral wool path is then moved into a heat treatment oven in which the mineral wool is compressed between two perforated conveyor belts, whereupon a hot air flow is blown through said belts and the mineral wool which is present therebetween. Thereby the binder of the mineral wool is solidified. The mineral wool path is said to be hardened. The mineral wool thereby gets a thickness which substantially corresponds to the distance between the two conveyor belts of the heat treatment oven.

The original mineral wool path has a relatively low density. The weight thereof per horizontal square unit, referred to in the following as the surface weight, depends on the speed of the conveyor and of the amount of mineral wool manufactured per time unit. The density of the hardened mineral wool path depends on the surface weight of the un-hardened mineral wool path and of the distance between the press belts of the heat treatment oven. Normally, the amount of mineral wool produced per time unit is not considered as a variable production parameter. If thus a higher density is desired for a given thickness of the ready product there is instead chosen to slow down the speed of the conveyors of the production system. The conveyors consist of the pervious collection conveyors of the manufacture process and the two conveyor belts of the hardening oven.

In some plants several primary layers of mineral wool are first collected on several different conveyors, and said primary layers are then combined to a thicker layer before being introduced in the hardening oven. In other plants a primary, relatively thin path of mineral wool is collected on the conveyor and said primary layer is then formed to a thicker mineral wool path by a lapping process and the lapped mineral wool path is then introduced in the hardening oven.

Mineral wool paths produced as mentioned above have substan tially the same density throughout the thickness thereof. The mineral wool paths get different stiffness especially depending on said density, the amount of binderwhich is added and the type of mineral wool. Stiff mineral wool paths are cut into plates, whereas mineral wool paths having very little stiffness may be cut into a flexible felt.

The densities of mineral wool plates cover a large interval, like from some few to several hundred kg/m³. The lightest plates are used as insulation plates for walls, whereas the most heavy plates are used as ground insulation plates and as insulation plates for flat roofs which have to stand the pressure from walking people and light transport vehicles.

Such roof insulation layers nowadays often are relatively thick. If there is a need for the plate to have the same mechanical properties throughout the entire plate a large quantity of material has to be used. It has, in this connection, been found that it is sufficient that a top layer can stand the largest stresses and can distribute the load. The remaining parts of the insulation layer can have a less pressure resistance and thereby a less density. Based on this observation roof insulations have been built by a thick mineral wool plate having a reasonable density and on top thereof a thinner mineral wool plate have a relatively high density, which combined plate is named a mineral wool board.

The production of such a mineral wool board involves an extra operation step, and there is also a need to use several different materials. Attempts have been made to solve such problems by glue connecting two plates in the factory, namely one thick plate having a low density and one thin plate having a high density. Also this method involves, however, additional work and it is necessary to supply glue for connecting the plates.

There are also other solutions of the problem according to which it is necessary, for an optimum exploitation of the material, to build up a layer of mineral wool from part-layers having different density.

Obviously there is a need for a process for the manufacture of a mineral wool plate having a density which varies optionally throughout the body of the mineral wool plate, in the first place such that at least one of the surface layers has a substantially higher density than the remaining parts of the plate. Such processes also have been proposed earlier. According to one of said proposals the mineral wool layer is compressed by means of a hot roller or a hot belt before entering the hardening oven. This compression should be stronger than the compression made in the hardening oven. The mineral wool layer thereby is compressed to a high density at the same time as the binder of the part of the mineral wool located closest the the hot roller or the hot belt becomes hardened. When said primary compression is ceased the parts of the mineral wool layer in which the binder is not hardened swell back to a less density. When the mineral wool layer is then compressed in the hardening oven the density is increased but not to such extent as in the part of the layer in which the binder is already hardened. After the remaining part of the binder has become hardened in the hardening oven the mineral wool layer thereby will contain a portion close one surface which has become hardened by the hot roller or the hot belt before the mineral wool layer enters the hardening oven and which has a higher density than the remaining parts of the mineral wool layer.

Another process in based on the observation that it is possible, by a so called mangling operation, whereby is meant a very strong compression between one or more pairs of rollers, to break down the structure of the mineral wool so that the density thereof is increased and so that the mineral wool, thus treated, gets a substantially higher density in the hardening oven than mineral wool that has not been mangled. This method, however, is disadvantageous in that the mechanical resistance of the mineral wool, having obtained said increased density, is not as good as it might have been expected considering the increased density. The reason therefore is that the fibres become broken to shorter pieces of fibres during the mangling operation. The short-fibrous structure also involves the disadvantage that the mineral wool becomes more "dusty" since short fibres more easily are released from the product than long fibres. Such loose short fibres may stick to the skin of people and they may also remain air-born whereby they can irritate the respiratory tracts of people working with the products.

Since compressed mineral wool plates consume much more mineral wool than non-compressed mineral wool for obtaining the same thickness of the plate it has been suggested to combine a non-compressed mineral wool layer having a low density with a compressed mineral wool layer having such high density as to stand the pressure from walking people or from light transport vehicles etc.

The German patent 1.295.837 discloses a mineral wool plate comprising several mineral wool layers of different stiffness prepared separately and laid over each other before being introduced in a hardening oven.

Also, the Danish patent No 155.163 is discloses a method for the manufacture of mineral wool plates suited as floor and roof insulation plates and consisting of a combination of a high density high resistance layer and a low density low resistance layer, in which method a primary mineral wool layer is produced, which layer is split into two parts, one part of which is compressed so as to obtain a remaining compression before said one part is laid over the second, non-compressed part and the combined layer is introduced in the hardening oven.

In both said patents the mineral wool layer adapted to give the high pressure resistance to the combined mineral wool plate is compressed by a pressure extending at right angle to the plane of the path. Such cross compression is disadvantageous, both since there is a risk that mineral wool fibres become broken to short pieces as discussed above, and in that the mineral wool plate looses part of its valuable resilient properties.

It has been known since long that a compression of mineral wool in the longitudinal direction increases the pressure resistance of the mineral wool. Said longitudinal compression is a process in which a moving mineral wool layer produced according to normal methods, that is a layer in which the fibres to a great extent are orientated in the plane of the layer, is retarded in one or several steps without any possibility of swelling. The fibre layers thereby become waved and at the same time there is a certain equilization between more dense and less dense portions of the mineral wool mass. After the mineral wool layer has become hardened a longitudinally compressed mineral wool layer has a substantially greater pressure resistance than a not longitudinally compressed mineral wool layer having the same density and the same content of binder. It has been believed that said increased pressure resistance was not obtained until the binder had been hardened. Generally, however, very little has been known about the pressure resistance of non-hardened mineral wool layers, and nothing has been known about the circumstances related to longitudinal compression.

It has now proved that a substantial part of the increased pressure resistance actually is obtained by the longitudinal compression. Now, if a longitudinally compressed mineral wool layer is laid together with a normal mineral wool layer and the combined layer, thereby obtained, is compressed, as is done in a hardening oven, the longitudinally compressed layer is compressed to a less extent than the non-longitudinally compressed layer. The increase of the density due to the compression therefore mostly will follow in the latter layers. This is one of the basic points of the present invention.

Therefore, contrary to the known art the present invention relates to a method in which a primary mineral wool plate is divided into two or more mineral wool paths, the path or paths of which should have the low density is compressed in the longitudinal direction whereby said layer or layers get a certain improved stillness, whereafter all layers are combined and are compressed in connection to the heat treatment for making the binder become hardened.

Another basic point of the invention is the observation that the strongest demand on mineral wool plates of this type is the demand on point load resistance. A longitudinally compressed mineral wool structure has an impaired point load resistance as compared with normal mineral wool having an wool structure which is unchanged from the original collection of fibres and which is not compressed or expanded. A layer of the latter type therefore can serve as a protection layer of layer of the former type and this is in particular the case if the latter layer has an increased density.

Both above mentioned points are based on close structural and practical studies which have resulted in a mineral wool plate having very valuable properties and this is made by combining longitudinally compressed mineral wool layers and mineral wool layers the original structure of which has been left unchanged.

So, the invention relates to a method and an apparatus of manufacture of mineral wool plates in plants, in which mineral wool is produced suspended in a gaseous medium which is supplied with a binder and which is transferred to gas pervious collection conveyors on which the mineral wool deposits in the form of continuous paths whereas the gaseous medium passes through the collection conveyor, whereby several mineral wool paths are produced, and said several mineral wool paths are laid together to one single final path, and said one single final path is subjected to a heat treatment under compression in a hardening oven, whereby the binder of the mineral wool becomes hardened.

According to the invention at least one of said several mineral wool paths is compressed in its longitudinal direction by reducing the moving speed of the conveyor (longitudinal compression), whereas at least another one of said several mineral wool paths is conveyed such that the distance between adjacent points in the plane of the path is maintained substantially constant from the moment the mineral wool is deposited on the conveyor until it enters a hardening oven.

A sub-ordinated problem in executing the invention has been that the paths, after said at least one path has been longitudinally compressed, have to move with the same speed. This means that the paths originally must move with different speeds since the speed of at least one mineral wool path is reduced during the longitudinal compression thereof.

This sub-ordinated problem is solved in two basically different ways in the invention. The first solution is to collect the different layers to be laid together on different collection conveyors which are moving with different speeds. The collection conveyors may be part of the same or of different mineral wool producing setups. The former alternative is to be preferred considering the fact that is is relatively easy to divide and separate the mineral wool onto the two conveyors. In the latter alternative it is, on the other hand, possible to manufacture different types of mineral wool in the different mineral wool lines and this also can be utilized in executing the invention.

The invention is, however, best utilized in the type of mineral wool plants, in which thin primary mineral wool paths are formed on the collection conveyors which paths are then deposited by a reciprocatory pendulum movement to thicker, secondary paths. In that case the different paths, at least one of which is to be longitudinally compressed, can be formed by pendulum depositing a corresponding number of primary paths formed by longitudinally dividing one single original primary mineral wool path.

The actual pendulum movement does not cause a stretching or a compression in the sense discussed in the present case, even if, considered mathematically, some points of the primary path may come closer to each other during the collection process.

It is also possible to combine the two alternatives, whereby several separate primary paths are collected, each path of which is then separately pendulum-deposited with different speeds to form secondary layers. At least one of said secondary layers is subjected to a longitudinal compression whereas at least one other secondary layer is maintained un-stretched or un-compressed in the plane of the layer.

Irrespective how the different paths are formed it may sometimes by suitable to supply different amounts of binder to the different paths. This is obviously possible when the paths are coming from different setups. If the paths are produced separately in one and the same mineral wool producing plant it is actually possible to identify the very part of the mineral wool suspended in the air of the gas which mainly forms a specific path. If the different paths are formed by longitudinally dividing one single original path it is likewise possible to identify the part of the mineral wool suspension forming the layer adapted to later be separated. More or less binder then can be supplied to said identified parts of the mineral wool as compared with the amount of binder supplied to the other parts of the mineral wool suspension.

If the invention is executed in processes, in which a thin original primary path is formed adapted to later be longitudinally divided into two or several separate paths, additional binder also can be supplied directly to a certain part or to certain parts of said original layer or to one or more of the paths formed due to the longitudinal dividing of the primary mineral wool path.

The invention is to be more closely explained by examples thereof.

The normal execution of the invention is the case utlizing two layers, one layer of which comprises a larger portion of the total amount of mineral wool and is subjected to longitudinal compression. Also three layers can be used, for instance for use in a sandwich element, as material in sound baffles etc. One of said three layers is thereby longitudinally compressed and the other two layers are applied as cover layers, one on each side of the longitudinally compressed layer.

The invention is illustrated by the attached figures 1-4. Figure 1 shows the principle of the invention using two separate mineral wool producing plants. Figure 2 illustrates the principle of the invention using only one mineral wool producing plant and collecting the fibres on two separate collection means. Figures 3 and 4 are two views illustrating the principle of the invention in a mineral wool producing plant dividing the original mineral wool path into secondary paths.

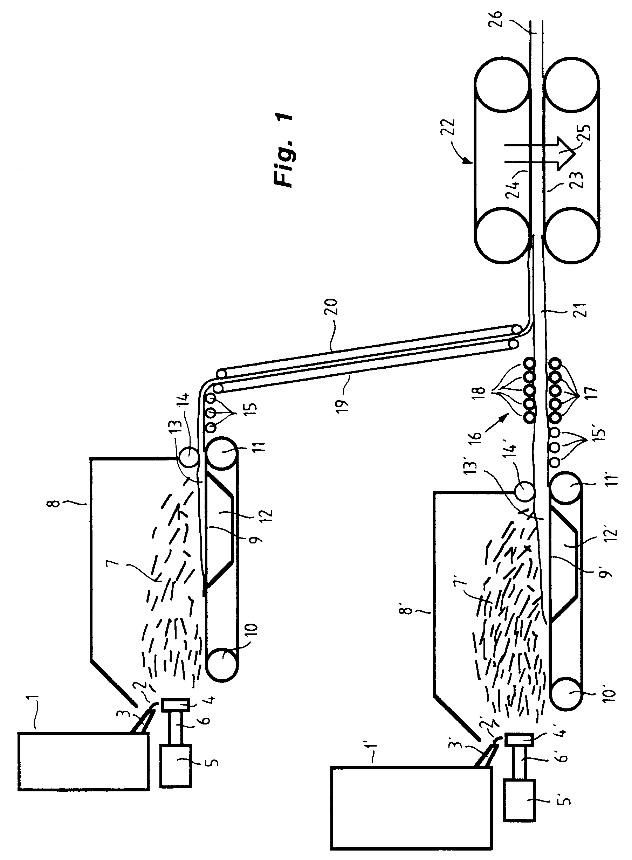

Figure 1 shows two melting furnaces 1, 1' from which melted mineral 2, 2' continuously flows out through flutes 3, 3' and down onto fibrillating means symbolized by spinning wheels 4, 4', which are driven by motors 5, 5' over shafts 6, 6'. It is of no importance to the invention what type of fibrillating means is used. From the spinning wheels 4, 4' the melted mineral i thrown out forming fibres 7, 7' which are transferred to the chambers 8, 8'. Said chambers comprise conveyors 9, 9' of a gas pervious material, for instance a perforated steel belt, extending over drums 10, 10' and 11, 11'. Underneath the conveyors 9, 9' there are suction boxes 12, 12' from which air is withdrawn over (not illustrated) conduits.

In connection to the fibrillation the mineral wool is sprayed with a finely distributed binder by means of nozzles (not illustrated in the drawing).

The air which is evacuated via the suction boxes 12, 12', of course, comes from the chambers 8, 8'. Said air is substituted by air entering from the left side as shown in the drawing and which upon passing the spinning wheels 4, 4' brings the fibres into the chamber.

When the air is drawn through the conveyors 9, 9' the mineral wool fibres deposit on the conveyors in the form of mineral wool mats 13, 13' which are continuously moved out of the chambers. At the outlet the chambers are sealed by rollers 14, 14'.

The mat 13' is moved over the rollers 15' and into a longitudinal compression means 16 symbolized by a number of rollers 17 below the mineral wool mat and corresponding rollers 18 above the mat. Each roller 17 forms, together with a corresponding roller 18, a pair of rollers. The pairs of rollers are rotated with a successively reduced speed so that the mat 13' leaves the longitudinal compression means with a substantially less speed than the entering speed.

After the mat 13' has left the longitudinal compression means the mat 13 is laid down thereon by means of the conveyors 19, 20. The combined mat 21, thereby formed, is then transferred into a hardening (heat treatment) oven 22, which is symbolized in the drawing by a lower conveyor 23 and an upper conveyor 24. A flow of hot gas, indicated by the arrow 25 in the drawing, is pressed through the mineral wool in the hardening oven. After the binder is hardened the mineral wool leaves the hardening oven 22 in the form of a path 26.

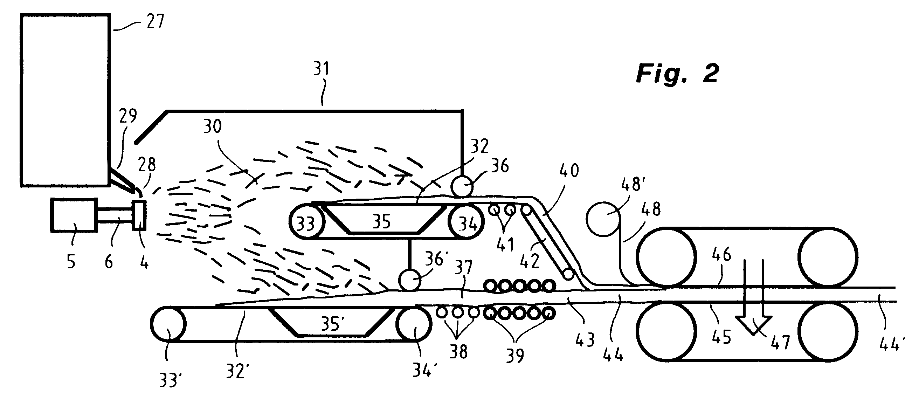

Figure 2 shows a corresponding plant, in which only one mineral wool producing apparatus is utilized. The plant comprises a furnace 27 from which melted mineral 28 continuously flows out through the flute 29 and down onto a fibrillation apparatus which is symbolized by the spinning wheel 4 driven by the motor 5 via the shaft 6. The suspension of fibres 30 formed by the spinning wheel is introduced in a chamber 31 having two collection conveyors or belts 32, 32' extending over rollers 33, 33' and 34, 34'. Suction boxes 35, 35' are mounted underneath the collection belts, which suction boxes are evacuated by (not illustrated) suction conduits. By the action of the suction boxes 35, 35' a flow of air is introduced in the chamber 31 past the fibrillation apparatus. The air flow brings the fibres just formed by the spinning wheel 4.

The air flow and thereby the fiber suspension 30 is divided between the two collection belts 32, 32' with the suction boxes 35, 35'. By distributing the suction effect in the suction boxes 35, 35' the distribution of fibres between the collection belts 32, 32' can be varied. The exit of the chamber 31 is sealed by means of rollers 36, 36'.

The belt 32' is moved with a higher speed than the belt 32. The mineral wool path 37 collected on the belt 32' is, by means of rollers 38, transferred to a longitudinal compression means 39 similar to the longitudinal compression means 17, 18 of figure 1. In the compression means the speed of the mineral wool path is reduced to the same speed as that of the collection belt 32.

The mineral wool path 40 collected on the collection belt 32 is, by means of rollers 41 and the belt 42, moved down towards the longitudinally compressed path 43, whereupon the combined mineral wool path 44 is moved into the hardening oven which in figure 2 is symbolized by the hardening oven belts 45 and 46 and the flow arrow 47 which defines the direction of the hot gas flow causing the binder of the mineral wool to become hardened. Thereafter the mineral wool leaves the hardening oven in the form of a path 44' which is ready for being cooled and cut to the intended format.

Eventually the combined mineral wool path also may comprise staple fibre vlies 48 which is laid down on the upper side of the path 40. The staple fibre vlies is rolled off the diagrammatically illustrated apparatus 48'.

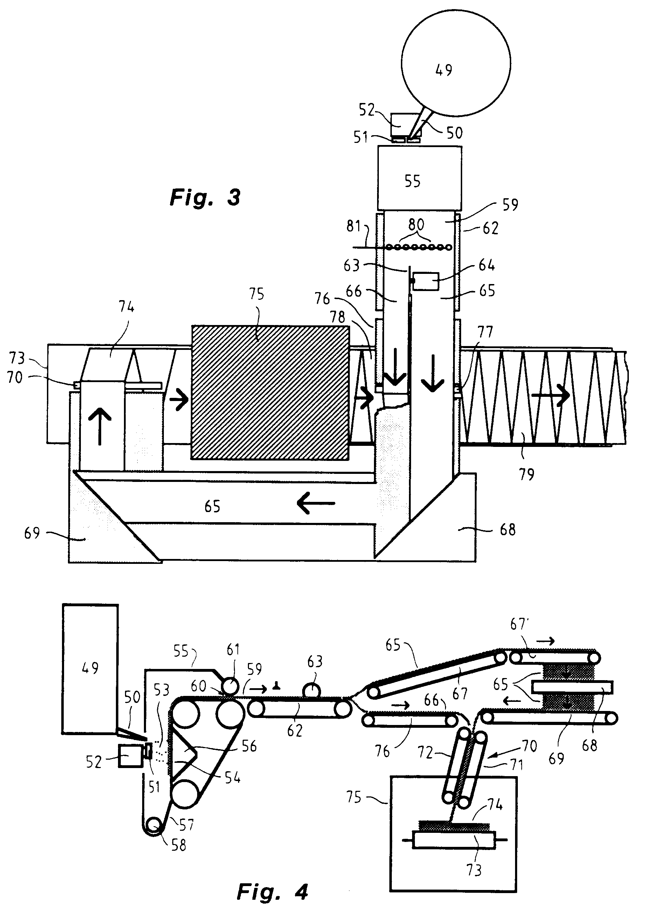

Figures 3 and 4 show two views of another plant for executing the invention. Melted mineral from a furnace 49 is supplied to the spinning wheels 51 via a flute 50. The spinning wheels 51 are driven by the apparatus 52. The fibres 53 obtained from the spinning wheels are drawn to the collection conveyor belt 53 in the chamber 55. A suction box 56 mounted behind the conveyor belt 54 is evacuated by a suction conduit (not illustrated). The suction from the suction box 56 provides an air flow which draws the fibres 53 to the collection belt 54. At the bottom of the chamber 55 there is a pocket 57 for collecting eventual un-fibrillated melted mineral. A screw conveyor 58 is mounted at the bottom of the pocket 57 for discharging the dropping material from the pocket.

The mineral wool which has been collected is, in the form of an integral path 59, moved out of the chamber 55 via an opening 60 which is sealed by a roller 61. Outside said opening 60 the mineral wool path is transmitted to a conveyor 62. A dividing saw blade 63 is provided adjacent said conveyor 62, which saw blade is driven by a motor 64 and which divides the path 59 into two paths 65, 66.

The dividing saw blade 63 is mounted so that it can be displaced perpendicularly to the conveyor 62, whereby the widths of the paths 65 and 66 can be varied.

The path 65 is by the conveyors 67, 67' moved obliquely upwards and is deposited on the conveyor 68 mounted perpendicularly to the conveyor 67'. The conveyor 68, in turn, deposits the path on another conveyor 69 mounted perpendicularly to the conveyor 68. It is possible to deposit a continuous path from a first conveyor to a second conveyor mounted perpendicularly thereto if said first conveyor comprises a large number of narrow belts of different length. In figure 3 this is symbolized by belts one end of which forms 45^{o} angle to the longitudinal direction of the belt.

The conveyor 69 moves the path 65 as far as to a so called pendulum 70 which is arranged as two parallel, downwards extending conveyors 71, 72 which are rotatably mounted at the upper part thereof. The pendulum 70 is given a reciprocating pendulum movment by a driving means (not illustrated in the drawings) the frequency and amplitude of which is synchronized with the other relevant parametres of the apparatus. The said reciprocatory pendulum movement makes the path 65 become deposited on the conveyor 73 in windings thereby forming a thicker path 74. Said path is by the conveyor 73 moved into the longitudinal compression means 75 in which the path, as shown in figures 1 and 2, is forced to pass between several pairs of rollers and in which the speed of the path is strongly reduced, and during which process the path is not allowed to get an increased thickness.

The path 66, which is divided from the path 59, is moved down onto the conveyor 76 and is by said conveyor moved as fas as to a pendulum 77 which is similar to the pendulum 70. The pendulum 77 deposits the path 66 in windings on top of the longitudinally compressed path 78 coming from the compression apparatus 75. Thereby a combined path 79 is obtained comprising a lower, longitudinally compressed layer and an upper layer having a normal mineral wool structure. Also in this case staple fibre vlies can be deposited on top of the upper mineral wool layer.

A ray of spreaders 80 is provided above the conveyor 61 in the apparatus according 3 and 4, which spreaders are supplied with a binder over the conduit 81. The entire path 59 or parts thereof can be supplied with addition binder by means of said spreaders. Such binder also can be added inside the chamber 55 by means of a ray of spreaders similar to the spreaders 80 and preferably mounted adjacent the opening 60 of the chamber. If only the edges of the path 59 are to be supplied with additional binder spreaders can be mounted on the walls of the chamber 55.

In the following the invention is to be illustrated by way of some examples. It is emphasized that the method of the invention can be adapted to many different type of mineral wool plates for many various fields of use. The following examples, however, do only relate to plates for outside insulation of flat roofs which should be capable of withstandning the load of walking people and light transportation.

A good way of testing mineral wool plates for this purpose is the so called "heel test". This test primarily intends to imitate people walking on a non-covered insulation layer, whereby is meant the condition in which the layer is presented before it is covered with roofing board. If walking people leave remaining impressions in the plate the glue joint between the mineral wool plant and the roofing board becomes imperfect. The heel test is made so that a test plate having an area of 100*100 mm and having rounded corners (radius about 3 mm) is pressed to the mineral wool plate with such force as to get a compression (impression) of 10 mm. The necessary force therefore is registered. Thereafter the test plate is pressed against the mineral wool plate with a force of 1.5 kN and the remaining impression is registered. Generally a remaining impression of not more than 1-2 mm is acceptable.

All statements in the following relate to a stone wool insulation having a total thickness of 140 mm and in which the longitudinal compression, in case such compression is made, is made by reducing the speed to one third of the original speed. If not stated otherwise, the amount of binder is about 3 percent by weight. Further, all insolations have been covered with a thin layer of staple fibre vlies having a surface weight of 50 kg/m², among other things for reducing the comsumption of binder when the roofing board is glue connected to a roofing board.

A sufficient result in the heel test, that means a remaining impression of about 1 mm, is obtained with longitudinally compressed plates having the density 175 kg/m³ (reference A). By combining a 20 mm mineral wool board having about 3 percent by weight of binder and a longitudinally compressed plate having a thickness of 120 mm corresponding results are obtained already when the density of said latter plate reaches about 90 kg/m³. In this case the average density is about 106 kg/m³ (reference B).

In the latter case it is necessary to handle and to join two materials. If this handling and joining is made in situ the further problem appears that it is not possible to walk on the firstly laid layer without damaging same.

### TEST 1

When utilizing the invention two layers were produced in a test plant (test 1), mainly according to figure 2, both layers having the surface weight of 3.6 kg/m². One layer was compressed in the longitudinal direction by reducing the feeding speed thereof to one third, whereupon the layers were laid together and were hardened at a total thickness of 140 mm. Even if it was not possible to exactly identify the layers after they had been laid together and hardened it could be established that the longitudinally compressed layer covered about 120 mm of the total thickness. The average density which was 102 kg/m³ thereby corresponds to a density of about 170 kg/m³ of the thinner layer and about 91 kg/m³ of the thicker, longitudinally compressed layer.

A heel test showed that this plate obtained a remaining deformation of 1.1 mm, that is about the same as that of references A and B. As compared with reference A the plate comprises substantially less material, and as compared with reference B the test plate is a substantially more rational alternative from manufacturing viewpoint.

### TEST 2

Another test (test 2) was made, which basically corresponds to the method of figures 3 and 4, and in which a thin primary layer was first produced having a width of about 2000 mm and a surface weight of about 0.2 kg/m². This layer was divided into two paths having a width of 450 and 1550 mm resp. The wider one of said paths was pendulum reciprocated to a secondary path, 900 mm wide and having a surface weight of 3.54 kg/m², and said path was longitudinally compressed by reducing the feeding speed to to one third of its original speed. The second one of said divided paths was pendulum reciprocated on top of the secondary path obtained after the longitudinal compression of the first path and to the same width as the first path. The surface weight of the second path was determined to 3.06 kg/m². The combined path was covered with vlies and was hardened at a thickness of 140 mm, whereby the path obtained the density of 98 kg/m³. Examination showed that the longitudinally compressed layer covered 18 mm of the thickness of the product, and a heel test showed that the product had a remaining deformation of 1.5 mm.

In practice this test was made so that the primary path was produced in a full scale plant in which the path was wound up and was transported to a 900 mm test plant in which the path was divided. The narrow part or the divided up layers was pemdulum reciprocated and the resulting secondary path was temporarily removed. Thereafter the wider part of the divided path was pendumlum reciprocated and was longitudinally compressed, whereafter the previously prepared secondary path, which was not longitudinally compressed, was laid on top of the compressed path, and the combined path was moved into the hardening oven.

The following test also were performed accordingly. In those cases when three layers were used narrow parts of the original primary path were first pendulum reciprocated and the resulting secondary paths were temporarily taken away. Thereafter the wider part of the primary path was pendulum reciprocated and was longitudinally compressed, whereby one of the previously prepared secondary paths was added from underneath and the other one from above at the inlet of the hardening oven, so that the longitudinally compressed path got a non compressed layer on each side thereof.

### TEST 3

| | | | |
|---|---|---|---|
| Layer 1 | not longitudinally compressed | thickness about 20 mm | density 142kg/m³ |
| Layer 2 | longitudinally compressed | thickness about 120 mm | density 95 kg/m³ |
| Result: Remaining deformation after heel test = 3.7 mm - not acceptable. | | | |

### TEST 4

| | | | |
|---|---|---|---|
| Layer 1 | not longitudinally compressed | thickness about 8 mm | density 175 kg/m³ |
| Layer 2 | longitudinally compressed | thickness about 132 mm | density 90 kg/m³ |
| Result: Remaining deformation after heel test = 5.4 mm - not acceptable. | | | |

### TEST 5

| | | | |
|---|---|---|---|
| Layer 1 | not longitudinally compressed | thickness about 20 mm | density 170 kg/m³ |
| Layer 2 | longitudinally compressed 3:1 | thickness about 150 mm | density 80 kg/m³ |
| Layer 3 | not longitudinally compressed | thickness about 10 mm | density 175 kg/m³ |
| Result: remaining deformation after heel test against layer 1 = 1.8 mm which is considered acceptable; remaining deformation after heel test against layer 3 = 4.9 mm - not acceptable. | | | |

For the very intended purpose there are obviously limits for process parametres in that said parameters must be higher than said limits. Said limits have to be tested for each purpose. In many cases the invention still suggests a solution which, from material economical viewpoint, is advantegeous as compared with previously known processes.

### Reference numerals

### Figure 1

- 1: melting furnace (1')
- 2: melted mineral (2')
- 3: flute (3')
- 4: spinning wheel (4')
- 5: motor (5')
- 6: shaft (6')
- 7: fibres (7')
- 8: chamber (8')
- 9: conveyor (9')
- 10: drum (10')
- 11: drum (11')
- 12: suction box (12')
- 13: mat (13')
- 14: roller (14')
- 15: roller (15')
- 16: compression means
- 17: rollers
- 18: rollers
- 19: conveyor
- 20: conveyor
- 21: combined path
- 22: hardening oven
- 23: lower belt
- 24: upper belt
- 25: (arrow)
- 26: path

### Figure 2

- 27: furnace
- 28: melted mineral
- 29: flute
- 30: fibres
- 31: chamber
- 32: conveyor (32')
- 33: roller (33')
- 34: roller (34')
- 35: suction box (35')
- 36: roller (36')
- 37: path
- 38: roller
- 39: compression means
- 40: path
- 41: roller
- 42: roller
- 43: path
- 44: path
- 45: hardening belt
- 46: hardening belt
- 47: (arrow)
- 48: supply means (48')

### Figures 3-4

- 49: furnace
- 50: flute
- 51: spinning wheel
- 52: motor
- 53: fibres
- 54: conveyor
- 55: chamber
- 56: suction box
- 57: pocket
- 58: screw
- 59: path
- 60: opening
- 61: roller
- 62: conveyor
- 63: saw blade
- 64: motor
- 65: path
- 66: path
- 67: conveyor (67')
- 68: conveyor
- 69: conveyor
- 70: pendulum
- 71: conveyor
- 72: conveyor
- 73: conveyor
- 74: path
- 75: compression means
- 76: conveyor
- 77: pendulum
- 78: path
- 79: path
- 80: spreader
- 81: conduit

## Claims

1. A method for the manufacture of mineral wool plates in plants, in which mineral wool is produced suspended in a gaseous medium which is supplied with a binder and which is transferred to gas pervious collection conveyors (9, 9'; 32, 32'; 54) on which the mineral wool deposits in the form of continuous paths whereas the gaseous medium passes through the collection conveyor, whereby two mineral wool paths (13, 13'; 37, 40; 65, 66) are produced, and said two mineral wool paths are laid together to form one single final mineral wool path (21; 44; 78), and said one single final path is subjected to a heat treatment in a hardening oven (22; 47; 75), whereby the binder of the mineral wool becomes hardened, **characterized**
in that the fibre orientation of one (13'; 37; 65) of said two mineral wool paths is is being rearranged from mainly horizontal to mainly vertical direction in that said one mineral wool path (13'; 37; 65) is compressed in its longitudinal direction by reducing the moving speed (17, 18; 39; 71, 72) of the conveyor thereof (longitudinal compression),
whereas the other one (13; 40; 66) of said two mineral wool paths is conveyed such that the distance between adjacent points in the plane of the path is maintained substantially constant from the moment the mineral wool is deposited on the conveyor until it enters a hardening oven,
and in that the single final mineral wool path (21, 44, 78) is compressed in the vertical direction in connection to the heat treatment thereof.

2. Method according to claim 1, **characterized** in that two thin primary paths are prepared in a first step, which thin primary paths are transformed to thicker paths by a folding process.

3. Method according to claim 2, **characterized** in that the two primary paths (65, 66) are formed by dividing one single original primary mineral wool path into two part-paths. (Figure 3)

4. Method according to claim 1, **characterized** in that the two mineral wool paths are formed by separately collecting mineral wool fibres on two collection conveyors (9, 9'; 32; 32') operating at different speeds such that the paths, after the longitudinal compression of one (13'; 37; 65) of said two paths, are conveyed with the same speed.

5. Method according to any of claims 1-4, **characterized** in that the path which is to be longitudinally compressed has a surface weight which is at least twice the surface weight(s) of the other path(s).

6. Method according to any of claims 1-5, **characterized** in that the longitudinal compression is made by reducing the moving speed of the path to less than half, preferably one third, of the speed of said path before the longitudinal compression started.

7. Method according to any of claims 1-6, **characterized** in that the two paths are given different amounts of binder, preferably so that the path which is not to be longitudinally compressed is given a higher amount of binder than the other path.

8. Apparatus for executing the method according to any of claims 1-7, comprising
a) at least one melting apparatus (1; 1'; 27; 49) for melting mineral raw materials,
b) at least one fibrillation means (4-6; 4'-6'; 51-52) for fibrillating the melted mineral materials,
c) one or more suction means (12; 12'; 35; 35'; 56) for establishing a flow of a gaseous medium past the fibrillation means,
d1) a conveyor (54) which allows the gaseous medium to pass therethrough but which keeps the mineral wool fibres thereon, whereby a primary path (59) of mineral wool fibres is formed thereon; a means cutting (63, 64) for dividing said primary mineral wool path in the logitudinal direction to form two longitudinal part-paths; and several means (70, 77), for instance a pendulum means, for forming a secondary mineral wool path (74, 79) from each part-path by reciprocatory folding same, or
d2) several conveyors (9; 9'; 32; 32') which allow the gaseous medium to pass therethrough but which keep the mineral wool fibres thereon so as to form two continuous mineral wool paths (13; 13'; 37; 40) thereon;
e) one or more guide means (19, 20; 42) for laying said two mineral wool paths (13, 13'; 40, 43) together to form one final mineral wool path (21, 44),
f) a heat treatment apparatus (22-24; 45-46), so called hardening oven, for having a binder included in the final mineral wool path (21) to become hardened,
**characterized** in that the apparatus further comprises g) at least one compression means (17, 18; 39; 75) for longitudinally compressing one of the mineral wool paths by reducing the moving speed (17, 18; 39; 71, 72) of the conveyor for said one mineral wool path to less than half , preferably one third, of the speed of said path before the longitudinal compression started,
provided upstream of the heat treatment apparatus and upstream of the the place (e) where the said two mineral wool paths are being laid together, and a further means for compressing the final mineral wool path (21) in the vertical direction.

## Patentansprüche

1. Verfahren zum Herstellen von Mineralwollplatten in Anlagen, in denen Mineralwolle, suspendiert in einem gasförmigen Medium, produziert wird, welche mit einem Bindemittel versehen und zu gasdurchlässigen Sammelförderern (9, 9'; 32, 32'; 54) verbracht wird, auf denen sich die Mineralwolle in Form von kontinuierlichen Bahnen ablagert, während das gasförmige Medium durch die Sammelförderer hindurchgeht, wobei zwei Mineralwollbahnen (13, 13'; 37, 40; 65, 66) produziert und zur Bildung einer einzigen endgültigen Bahn (21; 44; 78) zusammengelegt werden und wobei die einzige endgültige Bahn einer Wärmebehandlung in einem Aushärteofen (22; 47; 75) unterworfen wird, wobei das Bindemittel der Mineralwolle ausgehärtet wird, dadurch gekennzeichnet, daß
die Faserorientierung einer (13'; 37; 65) der beiden Mineralwollbahnen von im wesentlichen horizontalaler zu im wesentlichen vertikaler Richtung umgeordnet wird, indem besagte Mineralwollbahn (13'; 37; 65) durch Reduzierung der Bewegungsgeschwindigkeit ihres Förderers (17, 18; 39; 71, 72) in ihrer Längsrichtung komprimiert wird (Längskompression),
während die andere (13; 40; 60) der beiden Mineralwollbahnen derart transportiert wird, daß der Abstand zwischen benachbarten Punkten in der Ebene der Bahn im wesentlichen konstant gehalten wird von dem Zeitpunkt, in dem die Mineralwolle auf dem Förderer abgelegt wird, bis sie in einen Härteofen eintritt,
und daß die einzige endgültige Mineralwollbahn (21; 44; 78) in Verbindung mit ihrer Wärmebehandlung in vertikaler Richtung komprimiert wird.

2. Verfahren nach Anspruch 1, dadurch egkennzeichnet, daß in einem ersten Schritt zwei dünne Primär-Bahnen vorbereitet werden, die durch einen Faltprozeß zu dickeren Bahnen umgeformt werden.

3. Verfahren nach Anspruch 2, dadurch gekennzeichnet, daß die beiden Primär-Bahnen (65, 66) geformt werden durch Teilen einer einzigen ursprünglichen Primär-Mineralwollbahn in zwei Teil-Bahnen (Figur 3).

4. Verfahren nach Anspruch 1, dadurch gekennzeichnet, daß die beiden Mineralwollbahnen geformt werden durch separates Sammeln von Mineralwollfasern auf zwei Sanmelförderern (9, 9'; 32; 32'), die mit unterschiedlichen Geschwindigkeiten arbeiten, derart, daß die Bahnen, nach der Längskompression einer (13'; 37; 65) der beiden Bahnen, mit derselben Geschwindigkeit transportiert werden.

5. Verfahren nach einem der Ansprüche 1 bis 4, dadurch gekennzeichnet, daß die Bahn, die in Längsrichtung komprimiert werden soll, ein Flächengewicht besitzt, das mindestens doppelt so hoch ist wie das Flächengewicht oder die Flächengewichte der anderen Bahn bzw. Bahnen.

6. Verfahren nach einem der Ansprüche 1 bis 5, dadurch gekennzeichnet, daß die Längskompression erzeugt wird durch Vermindern der Bewegungsgeschwindigkeit der Bahn auf weniger als die Hälfte, vorzugsweise ein Drittel der Geschwindigkeit dieser Bahn vor Beginn der Längskompression.

7. Verfahren nach einem der Ansprüche 1 bis 6, dadurch gekennzeichnet, daß den beiden Bahnen unterschiedliche Mengen, an Bindemittel beigegeben werden, vorzugsweise derart, daß diejenige Bahn, die nicht in Längsrichtung komprimiert werden soll, eine größere Menge an Bindemittel als die andere Bahn erhält.

8. Vorrichtung zum Durchführen des Verfahrens nach einem der Ansprüche 1 bis 7, mit
a) mindestens einem Schmelzapparat (1; 1'; 27; 49) zum Schmelzen mineralischer Rohmaterialien,
b) mindestens einer Faserbildeeinrichtung (4-6; 4'-6'; 51-52) zum Erzeugen von Fasern aus den geschmolzenen mineralischen Materialien,
c) einer oder mehreren Saugeinrichtungen (12; 12'; 35; 35'; 56) zum Erzeugen eines Stroms eines gasförmigen Mediums entlang der Faserbildeeinrichtung,
d1) einem Förderer (54), der das gasförmige Medium durchläßt, die Mineralwollfasern jedoch auf dem Förderer zurückhält, wobei eine Primär-Bahn (59) aus Mineralwollfasern auf dem Förderer gebildet wird; einer Schneideinrichtung (63, 64) zum Teilen der Primär-Mineralwollbahn in Längsrichtung, um zwei längslaufende Teil-Bahnen zu formen; und mehreren Einrichtungen (70, 77), beispielsweise einer Pendeleinrichtung, zum Ausbilden einer Sekundär-Mineralwollbahn (74, 79) aus jeder Teil-Bahn durch hin- und hergehendes Falten derselben, oder
d2) mehreren Förderern (9; 9'; 32; 32'), die das gasförmige Medium durchlassen, die Mineralfasern jedoch auf den Förderern zurückhalten, um zwei kontinuierliche Mineralwollbahnen (13; 13'; 37; 40) auf den Förderern zu bilden,
e) einer oder mehreren Führungseinrichtungen (19, 20; 42) zum Zusammenlegen der beiden Mineralwollbahnen (13, 13'; 40, 43), um eine einzige endgültige Mineralwollbahn (21, 44) zu bilden,
f) einem Wärmebehandlungsapparat (22-24; 45-46), einem sogenannten Aushärteofen, um ein in der endgültigen Mineralwollbahn (21) enthaltenes Bindemittel aushärten zu lassen,
dadurch gekennzeichnet, daß die Vorrichtung ferner aufweist
g) mindestens eine Kompressionseinrichtung (17, 18; 39; 75) zum Komprimieren einer der Mineralwollbahnen durch Vermindern der Bewegungsgeschwindigkeit (17, 18; 39; 71, 72) des Förderers für besagte eine Mineralwollbahn auf weniger als die Hälfte, vorzugsweise ein Drittel der Geschwindigkeit dieser Bahn vor Beginn der Längskompression, wobei diese mindestens eine Kompressionseinrichtung stromauf des Wärmebehandlungsapparates und stromauf derjenigen Stelle (e) vorgesehen ist, an der die beiden Mineralwollbahnen zusammengelegt werden, und eine weitere Einrichtung zum Komprimiren der endgültigen Mineralwollbahn (21) in vertikaler Richtung.

## Revendications

1. Procédé pour la fabrication de plaques de laine minérale dans des installations, dans lesquelles de la laine minérale est produite en suspension dans un milieu gazeux qui est alimenté avec un liant et qui est transféré vers des transporteurs (9, 9' ; 32, 32' ; 54) de collecte perméables aux gaz, sur lesquels la laine minérale se dépose sous la forme de courants continus alors que le milieu gazeux passe à travers le transporteur de collecte, de manière que deux courants (13, 13' ; 37, 40 ; 65, 66) de laine minérale soient produits, et lesdits courants de laine minérale sont rassemblés pour former un seul courant final (21 ; 44 ; 78), de laine minérale, dans un four de durcissement (22 ; 47 ; 75), grâce à quoi le liant de la laine minérale durcit,
caractérisé en ce que l'orientation des fibres d'un premier (13' ; 37 ; 65) desdits deux courants de laine minérale est réagencée d'une direction principalement horizontale à une direction principalement verticale par le fait que ledit premier courant (13' ; 37 ; 65) de laine minérale est comprimé dans sa direction longitudinale par réduction de la vitesse de déplacement (17, 18 ; 39 ; 71, 72) de son transporteur (compression longitudinale),
alors que l'autre (13 ; 40 ; 66) desdits deux courants de laine minérale est transporté de manière que la distance entre des points adjacents dans le plan du courant soit maintenue sensiblement constante à partir du moment où la laine minérale est déposée sur le transporteur jusqu'à ce qu'elle entre dans un four de durcissement, et en ce que le courant final (21, 44,78) de laine minérale est comprimé dans la direction verticale en liaison avec son traitement thermique.

2. Procédé selon la revendication 1, caractérisé en ce que deux courants primaires minces sont préparés dans une première étape, lesquels courants primaires minces sont transformés en courants plus épais par un processus de pliage.

3. Procédé selon la revendication 2, caractérisé en ce que les deux courants primaires (65, 66) sont formés par division d'un courant primaire initial unique de laine minérale en deux courants partiels (figure 3).

4. Procédé selon la revendication 1, caractérisé en ce que les deux courants de laine minérale sont formés par collecte séparée de fibres de laine minérale sur deux transporteurs (9, 9' ; 32, 32') de collecte fonctionnant à des vitesses différentes de manière que les courants, après la compression longitudinale de l'un (13' ; 37 ; 65) desdits deux courants, soient transportés à la même vitesse.

5. Procédé selon l'une quelconque des revendications 1 à 4, caractérisé en ce que le courant devant être comprimé longitudinalement présente une masse surfacique qui est au moins double de la ou des masses surfaciques du ou des autres courants.

6. Procédé selon l'une quelconque des revendications 1 à 5, caractérisé en ce que la compression longitudinale est réalisée par une diminution de la vitesse de déplacement du courant à moins de la moitié, avantageusement un tiers, de la vitesse dudit courant avant le commencement de la compression longitudinale.

7. Procédé selon l'une quelconque des revendications 1 à 6, caractérisé en ce que les deux courants reçoivent différentes quantités de liant, avantageusement de manière que le courant qui ne doit pas être comprimé longitudinalement reçoive une quantité de liant supérieure à celle de l'autre courant.

8. Appareil pour la mise en oeuvre du procédé selon l'une quelconque des revendications 1 à 7, comportant
a) au moins un appareil de fusion (1 ; 1' ; 27 ; 49) pour faire fondre des matières minérales brutes,
b) au moins un moyen de fibrillation (4-6 ; 4'-6' ; 51-52) pour fibriller les matières minérales fondues,
c) un ou plusieurs moyens d'aspiration (12 ; 12' ; 35 ; 35' ; 56) pour établir un flux d'un milieu gazeux passant devant les moyens de fibrillation,
d1) un transporteur (54) qui permet au milieu gazeux de passer à travers lui, mais qui retient les fibres de laine minérale sur lui, de manière qu'un courant primaire (59) de fibres de laine minérale soit formé sur lui ; un moyen de coupe (63, 64) destiné à diviser ledit courant primaire de laine minérale dans la direction longitudinale pour former deux courants longitudinaux partiels ; et plusieurs moyens (70, 72) par exemple un moyen à pendule, pour former un courant secondaire de laine minérale (74, 79) à partir de chaque courant partiel en le pliant par un mouvement alternatif, ou
d2) plusieurs transporteurs (9 ; 9' ; 32 ; 32') qui permettent au milieu gazeux de passer à travers eux, mais qui retiennent sur eux les fibres de laine minérale afin de former deux courants continus de laine minérale (13 ; 13' ; 37 ; 40) sur eux ;
e) un ou plusieurs moyens de guidage (19, 20 ; 42) pour poser lesdits deux courants de laine minérale (13, 13' ; 40, 43) ensemble afin de former un courant final (21, 44) de laine minérale,
f) un appareil de traitement thermique (22-24 ; 45-46), appelé four de durcissement, destiné à faire durcir un liant introduit dans le courant final (21) de laine minérale,
caractérisé en ce que l'appareil comporte en outre g) au moins un moyen de compression (17, 18 ; 39 ; 75) pour comprimer longitudinalement l'un des courants de laine minérale en réduisant la vitesse de déplacement (17, 18 ; 39 ; 71, 72) du transporteur dudit courant de laine minérale à moins de la moitié, avantageusement un tiers, de la vitesse dudit courant avant le commencement de la compression longitudinale,
disposé en amont de l'appareil de traitement thermique et en amont de l'emplacement (e) où lesdits deux courants de laine minérale sont posés ensemble, et un autre moyen pour comprimer le courant final (21) de laine minérale dans la direction verticale.
